# EUROPÄISCHE PATENTSCHRIFT

(11) **EP 1 862 485 B1**
(45) Veröffentlichungstag und Bekanntmachung des Hinweises auf die Patenterteilung: **02.09.2009**
(21) Anmeldenummer: 07010142.3
(22) Anmeldetag: 22.05.2007
(51) Int. Cl.: C08F 220/10

(54) **Wässrige Kopolymerisatdispersionen mit verbesserter Blockfestigkeit**
Aqueous co-polymer dispersions with improved resistance to caking
Dispersions de copolymérisats liquides à résistance améliorée au bloc

(30) Priorität: 30.05.2006 DE 102006025006
(43) Veröffentlichungstag der Anmeldung: 05.12.2007
(73) Patentinhaber: Bayer MaterialScience AG, 51368 Leverkusen (DE)
(72) Erfinder: Münzmay, Thomas, Dr., 41539 Dormagen (DE); Freudenberg, Ulrich, Dr., 50259 Pulheim (DE); Wamprecht, Christian, Dr., 41472 Neuss (DE); Irle, Christoph, Dr., 41539 Dormagen (DE); Roschu, Rolf, 47877 Willich (DE)

(56) Entgegenhaltungen:
- EP-A- 1 270 619
- WO-A-03/025041
- DE-A1- 19 908 018

## Beschreibung

Die Erfindung betrifft neue, wässrige Kopolymerisat-Sekundärdispersionen, ein Verfahren zu deren Herstellung und ihre Verwendung zur Herstellung hochwertiger Beschichtungen, insbesondere für Holz.

In der EP-A 358 979 werden wässrige Dispersionen hydroxyfunktioneller Copolymerisate, insbesondere sogenannte Sekundärdispersionen offenbart, die sich als besonders geeignete Polyolkomponenten für wässrige Polyurethan-(2K)-Zweikomponentenlacke etabliert haben. Diese Produkte haben sich speziell für den Bereich der Holzlackierung bewährt, da sich Lacke auf Basis von Kopolymerisat-Sekundärdispersionen durch eine besonders gute "Anfeuerung" des Holzes, d.h. Betonung der natürlichen Maserung des Holzes, auszeichnen. Andererseits benötigen wässrige Polyurethan-(2K)-Lacke auf Basis von Kopolymerisat-Sekundärdispersionen als Bindemittel in Anwendungsbereichen, die nur eine Raumtemperatur-Trocknung zulassen, wie z.B. bei der Parkettlackierung, eine zu lange Zeit, bis eine vollständige Belastbarkeit des Lacks erreicht ist. Als maßgeblich Größen für die Belastbarkeit gelten die Trocknungszeit und die Zeit bis eine ausreichende Beständigkeit gegen Dauerbelastung, wie z.B. durch schwere Möbelstücke erreicht wird (sog. Blockbeständigkeit).

In der EP-A 358 979, der DE-A 42 262 70 sowie der EP-A 1 024 184 werden wässrige Polyurethan-(2K)-Lacke auf Basis von Vinylpolymerisat-Sekundärdispersionen und Polyisocyanat-Vernetzern beschrieben, die bereits ein gutes Eigenschaftsniveau aufweisen. Die Vinylpolymerisate dienen dabei als Emulgator für die Polyisocyanate und verhindern dadurch die unerwünschte Isocyanat-Wasser-Reaktion. Nachteilig an diesen Systemen ist jedoch ihre mangelnde Trocknungsgeschwindigkeit, welche für Anwendungen im Bereich der Parkettlackierung unabdingbar ist.

In der DE-A 44 39 669 werden wässrige Zweikomponenten-Polyurethan-Beschichtungsmittel auf Basis wasserverdünnbarer Polyacrylatharze und Polyisocyanate beschrieben, welche als Klarlack über einer Basislackschicht appliziert werden und sich durch schnelle Staub- und Klebfreiheit sowie schnelle Durchtrocknung auszeichnen. Die dort beschriebenen Lacke werden insbesondere bei der Serien- oder Reparaturlackierung von Automobilkarosserien eingesetzt. Nachteilig an diesen Systemen ist ihre zu geringe Blockbeständigkeit, wodurch ein Einsatz im Bereich der Holzbeschichtung nicht möglich ist.

Es besteht daher für den Bereich der Holzlackierung weiterhin der Bedarf nach geeigneten Beschichtungsmittel, die sich zu Polyurethan-(2K)-Lacken mit guter Filmoptik, Härte, chemischer und mechanischer Beständigkeit verarbeiten lassen und gleichzeitig über eine ausreichende Trocknungsgeschwindigkeit bzw. Blockfestigkeit verfügen.

Aufgabe der vorliegenden Erfindung bestand somit in der Bereitstellung von wässrigen, hydroxyfunktionellen Kopolymerisat-Sekundärdispersionen und den daraus herstellbaren wässrigen Polyurethan-(2K)-Lacken, die eine schnelle Trocknung und verbesserte Blockfestigkeit, bei gleichzeitigem Erhalt der guten Anfeuerung, aufweisen.

Überraschend wurde nun gefunden, dass wässrige Sekundärdispersionen auf Basis hydroxylfunktioneller Kopolymerisate (P), die Struktureinheiten sowohl von Monomeren der Acrylsäure-und/oder Methacrylsäureester zykloaliphatischer Alkohole, als auch von Monomeren aliphatischer Vinylester enthalten, die Nachteile des Standes der Technik überwinden. Die daraus resultierenden Beschichtungen zeigen bei sehr guter Anfeuerung auf Holz, gleichzeitig eine schnelle Trocknung und frühe Blockfestigkeit.

Gegenstand der Erfindung sind somit wässrige Kopolymerisat-Sekundärdispersionen, enthaltend ein Kopolymer (P), aufgebaut aus einer Mischung radikalisch polymerisierbarer Monomeren (M) enthaltend
(M1) cycloaliphatische Ester der Acryl- und/oder Methylacrylsäure sowie
(M2) Vinylester aliphatischer Carbonsäuren.

Die den erfindungsgemäßen wässrigen Sekundärdispersionen zugrunde liegenden Kopolymere (P) werden durch radikalische Polymerisation olefinisch ungesättigter Monomere (M1) bis (M6) mit Radikal-Initiatoren (I) in einem mehrstufigen Verfahren hergestellt. Zur Herstellung der Kopolymere (P) kommen neben den Monomeren (M1) und (M2) auch die Monomere
(M3) hydroxyfunktionelle, radikalisch polymerisierbare Monomere,
(M4) carboxylfunktionelle, radikalisch polymerisierbare Monomere,
(M5) hydroxy- und carboxylgruppenfreie (Meth)acrylsäureester mit C₁-C₁₈-Kohlenwasserstoffresten im Alkoholteil und/oder Vinylaromaten sowie
(M6) gegebenenfalls weitere von (M1) bis (M5) verschiedene Monomere in Frage.

Bevorzugt sind die Kopolymere (P) aufgebaut aus Monomeren (M) ausgewählt aus der Gruppe enthaltend
(M1) 10 bis 30 Gew.-%, bevorzugt 12,5 bis 20 Gew.-% cycloaliphatische Ester der Acrylsäure und/oder Methacrylsäure oder deren Mischungen,
(M2) 7,5 bis 40 Gew.-%, bevorzugt 10 bis 30 Gew.-% Vinylester aliphatischer Carbonsäuren,
(M3) 14 bis 36 Gew.-%, bevorzugt 15 bis 30 Gew.-% hydroxyfunktionelle, radikalisch polymerisierbare Monomere,
(M4) 1 bis 4,5 Gew.-%, bevorzugt 2 bis 3,5 Gew.-% carboxylfunktionelle, radikalisch polymerisierbare Monomere,
(M5) 18 bis 62 Gew.-%, bevorzugt 20 bis 50 Gew.-% hydroxy- und carboxylgruppenfreie (Meth)acrylsäureester mit C1 bis C18-Kohlenwasserstoffresten im Alkoholteil und/oder Vinylaromaten,
(M6) 0 bis 40 Gew.-% weitere von (M1) bis (M5) verschiedene Monomere,
wobei die Kopolymere (P) 22,5 bis 50 Gew.-%, bevorzugt 22,5 bis 35 Gew.-% Monomerenbausteine (M1) plus (M2) enthalten und die Summen der Komponenten (M1) bis (M6) sich zu 100 Gew.-% addieren.

Im Sinne der vorliegenden Erfindung werden Acrylsäure oder Methacrylsäure auch als (Meth)-acrylsäure definiert.

Geeignete Monomere (M1) sind z.B. Cyclohexyl(meth)acrylat, mit Alkylgruppen am Ring substituierte Cyclohexyl(meth)acrylate, 4-tert.-Butylcyclohexyl(meth)acrylat, Norbornyl(meth)acrylat, Isobornyl(meth)acrylat, bevorzugt sind Isobornylacrylat und/oder Isobornylmethacrylat, besonders bevorzugt ist Isobornylmethacrylat. Es können auch Mischungen, enthaltend Isobornylacrylat und Isobornylmethacrylat und andere Monomere (M1) eingesetzt werden. Die von Isobornylacrylat und Isobornylmethacrylat verschiedenen Monomere (M1) können gegebenenfalls in Mengen von kleiner 10 Gew. %, bezogen auf die Summe (M1) bis (M5), mit verwendet werden.

Geeignete Monomeren (M2) sind die Versterungsprodukte von Vinylalkohol mit linearen oder verzweigten, aliphatischen Corbonsäuren wie beispielsweise Vinylacetat, Vinylpropionat, Vinylbutyrat, Vinyl-2-ethylhexanoat, Vinyloctanoat, Vinyldecanoat, Vinyldodecanoat (Vinyllaurat) oder Vinylstearat. Bevorzugt sind die Vinylester verzweigter, aliphatischer Carbonsäuren der allgemeinen Formel (I) 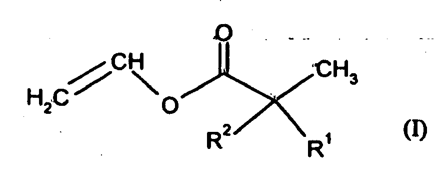 in welcher R¹ und R² gesättigte Alkylgruppen sind, enthaltend zusammen 6, 7 oder 8 C-Atome, entsprechend der Verbindungen VeoVa™ 9, 10 und 11.

Bevorzugt als Monomeren (M2) eingesetzt werden die als VeoVa^{TM} Monomer 9, 10 und 11 (Hexion Specialty Chemicals B.V., Rotterdam, NL) im Handel erhältlichen Vinylmonomeren, besonders bevorzugt ist VeoVa^{TM} Monomer 9.

Die genannten Monomere unterscheiden sich hinsichtlich der Glastemperatur ihrer Homopolymere:

| **Monomer** | **T_{G} [°C]** |
|---|---|
| VeoVa™ 9 | + 70 |
| VeoVa™ 10 | - 3 |
| VeoVa™ 11 | - 40 |

Als hydroxylfunktionelle Monomere (M3) kommen ethylenisch ungesättigte, hydroxylgruppenhaltige Monomere in Betracht, wie beispielsweise Hydroxyalkylester ungesättigter Carbonsäuren, bevorzugt Hydroxyalkyl(meth)acrylate mit 2 bis 12, bevorzugt 2 bis 6 Kohlenstoffatomen im Hydroxyalkylrest. Beispiele für besonders bevorzugte Verbindungen sind 2-Hydroxyethyl-(meth)acrylat, die isomeren Hydroxypropyl(meth)acrylate, 2-, 3- und 4-Hydroxybutyl(meth)-acrylate sowie die isomeren Hydroxyhexyl(meth)acrylate.

Geeignete carboxylfunktionelle radikalisch polymerisierbare Monomere (M4) sind olefinisch ungesättigte Monomere mit Carbonsäure- oder Carbonsäureanhydrid-Gruppen, wie z.B. Acrylsäure, Methacrylsäure, β-Carboxyethylacrylat, Crotonsäure, Fumarsäure, Maleinsäureanhydrid, Itaconsäure oder Monoalkylester zweibasiger Säuren bzw. Anhydride wie z.B. Maleinsäuremonoalkylester. Bevorzugt sind Acrylsäure und/oder Methacrylsäure.

Als hydroxyl- und carboxylgruppen-freie Monomere (M5) kommen Acrylate und Methacrylate mit 1 bis 18 Kohlenstoffatomen im Alkoholteil der Estergruppe zum Einsatz. Der Alkoholteil ist bevorzugt aliphatisch und kann linear oder verzweigt sein.

Als Monomere der Komponente (M5) sind beispielsweise Methyl-, Ethyl-, n-Propyl-, Isopropyl-, n-Butyl-, Isobutyl-, t-Butyl-, die isomeren Pentyl-, Hexyl-, 2-Ethylhexyl-, Octyl-, Dodecyl-, Hexadecyl- und Octadecyl(meth)acrylate geeignet. Geeignete Vinylaromaten sind insbesondere Styrol, gegebenenfalls substituierte Styrole und Vinyltoluole. Bevorzugt als Monomere (M5) sind Methyl-, n-Butyl-, Isobutyl-, t-Butyl-(meth)acrylat sowie 2-Ethyl-hexylacrylat und Styrol.

Geeignete Monomere (M6) sind Acetoacetoxyethylmethacrylat, Acrylamid, Acrylnitril, Vinylether, Methacrylnitril oder Vinylacetate. Weiterhin können mit monofunktionellen Polyalkylenoxiden mit Molekulargewichten von 200 bis 3000 g/mol, bevorzugt 350 bis 1000 g/mol oder veresterte (Meth)acrylsäure, welche als nichtionische, hydrophile Gruppen geeignet sind anteilig mitverwendet werden. Als Alkylenoxide kommt bevorzugt Ethylenoxid oder Mischungen von Ethylenoxid und Propylenoxid in Frage. Bevorzugt erfolgt die Hydrophilierung der Copolymerisate aber durch ionische Gruppen mittel Monomere (M4).

Die Mengenverhältnisse der Aufbaukomponenten (M1) bis (M6) werden so gewählt, dass das Copolymerisat (P) eine OH-Zahl von 35 bis 200 mg KOH/g, bevorzugt von 50 bis 125 mg KOH/g Feststoff und eine Säurezahl von 10 bis 50 mg KOH/g, bevorzugt 15 bis 30 KOH/g Feststoff auf weist.

Die Herstellung des Kopolymerisats (P) kann prinzipiell durch an sich bekannte radikalische Polymerisationsverfahren in organischer Phase durchgeführt werden. Bevorzugt erfolgt die Herstellung des Kopolymerisats (P) in einem mehrstufigen Prozess, wie er bereits in der EP-A 0 947 557 (S. 3 Z. 2 - S. 4 Z. 15) oder in der EP-A 1 024 184 (S. 2 Z. 53 - S. 4 Z. 9) beschrieben wurde. Dabei wird zunächst eine hydrophobe, säuregruppenarme oder -freie Monomermischung (MI) und dann, zu einem späteren Zeitpunkt der Polymerisation, eine hydrophilere, säuregruppenhaltige Monomermischung (MII) zudosiert, wobei die hydrophilere, säuregruppenhaltige Monomerenmischung (MII) keine Monomeren vom Typ (M1) und (M2) enthält.

Somit ist ebenfalls Gegenstand der vorliegenden Erfindung ein Verfahren zur Herstellung der erfindungsgemäßen, wässrigen Kopolymerisat-Sekundärdispersionen, dadurch gekennzeichnet, dass in einem ersten Schritt eine hydrophobe Monomermischung M(I), enthaltend die Monomere (M1) 16,5 bis 33,5 Gew.-%, (M2) 12,5 bis 44,5 Gew.-%, (M3) 10 bis 35 Gew.-%, (M4) 0 bis 2,5 Gew.-%, (M5) 10 bis 61 Gew.% und (M6) 0 bis 40 Gew.-%, polymerisiert wird und anschließend in einer zweiten Stufe zu dem erhaltenen Polymerisat eine hydrophile Monomermischung M(II), enthaltend die Monomere (M3) 20 bis 60 Gew.-%, (M4) 10 bis 45 Gew.-%, (M5) 30 bis 70 Gew.% und (M6) 0 bis 40 Gew.-%, zugegeben und zu einem Kopolymerisat (P) umgesetzt wird und das entstehende Säuregruppen aufweisende Kopolymerisat (P) in die wässrige Phase überführt wird, wobei vor oder während der Dispergierung mindestens 40 mol-% der Carboxylgruppen neutralisiert werden.

In einer weiteren Ausführungsform des erfindungsgemäßen Verfahrens wird in einem ersten Schritt eine Mischung (V), bestehend aus 30 bis 70 Gew.-% einer oder mehrerer Monomeren (M2) sowie 70 bis 30 Gew.-% eines organischen Lösungsmittels, in einem Reaktor vorgelegt werden, anschließend in einem zweiten Schritt eine hydrophobe Monomermischung M(I), enthaltend die Monomere (M1) 22,5 bis 36,5 Gew.%, (M2) 0 bis 33,5 Gew.-%, (M3) 10 bis 35 Gew.-%, (M4) 0 bis 2,5 Gew.-%, (M5) 10 bis 67,5 Gew.-% und (M6) 0 bis 40 Gew.-%, polymerisiert wird und anschließend in einer weiteren Stufe zu dem erhaltenen Polymerisat eine hydrophile Monomermischung M(II), enthaltend die Monomere (M3) 20 bis 60 Gew.-%, (M4) 10 bis 45 Gew.-%, (M5) 30 bis 70 Gew.-% und (M6) 0 bis 40 Gew.-%, zugegeben und zu einem Kopolymerisat (P) umgesetzt wird und das entstehende Säuregruppen aufweisende Kopolymerisat (P) in die wässrige Phase überführt wird, wobei vor oder während der Dispergierung mindestens 25 mol-% der Carboxylgruppen neutralisiert werden.

Die Kopolymerisation wird im Allgemeinen bei 40 bis 180°C, bevorzugt bei 80 bis 160°C durchgerührt. Als Initiatoren (I) für die Polymerisationsreaktion eignen sich organische Peroxide wie z.B. Di-tert.-Butylperoxid oder tert.-Butylperoxy-2-ethylhexanoat und Azoverbindungen. Die eingesetzten Initiatormengen hängen vom gewünschten Molekulargewicht ab. Aus Gründen der Prozesssicherheit und des leichteren Handlings können Peroxidinitiatoren auch als Lösung in geeigneten organischen Lösemitteln der bereits genannten Art eingesetzt werden.

Die Zugabegeschwindigkeit des Initiators (I) wird im erfindungsgemäßen Verfahren so gesteuert, dass diese bis zum Ende der Monomerdosierung (M) andauert und die Lösemittelmengen in ersten und zweiten Schritt so gewählt werden, dass ein Gehalt an organische Lösemitteln von weniger als 12 Gew.-% resultiert.

Bevorzugt werden die Mengen der Einsatzstoffe so bemessen, dass ein Massenverhältnis (V) : (M) von 1 : 9 bis 3 : 7 und (MI) : (MII) von 9 : 1 bis 6 : 4, besonders bevorzugt ein Massenverhältnis (V) : (M) von 1,2 : 8,8 bis 2 : 8 und (MI) : (MII) von 8,5 : 11,5 bis 7 : 3 resultiert.

Die radikalische Polymerisation kann in Gegenwart eines im Reaktionsgefäß vorgelegten Lösemittels oder Lösemittel/Wasser-Gemisches durchgeführt werden. Als geeignete organische Lösemittel kommen beliebige in der Lacktechnologie bekannte Lösemittel in Betracht, bevorzugt sind solche, die üblicherweise als Kolöser in wässrigen Dispersionen eingesetzt werden, wie z.B. Alkohole, Ether, Ethergruppen-haltige Alkohole, Ester, Ketone oder unpolare Kohlenwasserstoffe bzw. Gemische dieser Lösemittel. Die Lösemittel werden in solchen Mengen eingesetzt, dass ihr Gehalt in der fertigen Dispersion 0 bis 12 Gew.-%, bevorzugt 2 bis 8 Gew.-% beträgt.

Es ist-weiterhin bevorzugt, das Copolymerisat gemäß dem Verfahren der EP 1 024 184 herzustellen, wobei man ein hydrophobes Copolymerisat als Vorlage verwendet.

Bevorzugt ist somit ein Verfahren zur Herstellung von Kopolymerisaten P umfassend die Schritte
A) Vorlegen eines hydroxyfunktionellen hydrophoben Koplymerisats mit einer Säurezahl <10 mg KOH/g, einem OH-Gehalt von 0,5 % 7 % (bezogen jeweils auf 100 %iges Harz), einem Zahlenmittel des Molekurgewichtes Mₙ von 1.500 bis 20.000, gegebenenfalls in einem organischen Lösungsmittel gelöst, in ein Reaktionsgefäß,
B) Vordosieren eines Radikalstarters, gegebenenfalls gelöst in einem organischen Lösemittel, in das gleiche Reaktionsgefäß, in einer Menge von 5 % bis 40 % der insgesamt verwendeten Initiatormenge B,
C) Polymerisation eines hydrophoben, OH-Gruppen enthaltenden Monomergemischs in diesem Reaktionsgefäß bzw. in dieser Reaktionsmischung und
D) Polymerisation eines hydrophilen, OH-Gruppen und Säuregruppen enthaltenden Monomergemisches in diesem Reaktionsgefäß bzw. in dieser Reaktionsmischung, wobei mindestens 60 % der insgesamt eingebauten Säuregruppen in das Kopolymerisat P eingebracht werden,
dadurch gekennzeichnet, dass das Kopolymerisat P ein mittleres Molekulargewicht Mₙ von 3000 bis 7000, ein mittleres Molekulargewicht M_{w} von 10000 bis 25000 und eine Molekulargewichtsverteilung M_{w}/Mₙ von 2,5 bis 4,0, einen Hydroxylgruppen-Gehalt von 1 % bis 8 % aufweist und die Säurezahl des 100 %igen Kopolymerisats P 12 bis 30 mg KOH/g beträgt.

Statt eines mehrstufigen Polymerisationsverfahren ist es ebenfalls möglich das erfindungsgemäße Verfahren kontinuierlich (Gradientenpolymerisation) durchzuführen, d.h. es wird eine Monomermischung mit sich ändernder Zusammensetzung zugegeben, wobei die hydrophilen (säurefunktionellen) Monomeranteile gegen Ende des Zulaufs höher sind als zu Beginn.

Das zahlenmittlere Molekulargewicht Mn der Kopolymerisate (P) kann durch gezielte Wahl der Prozessparameter, z.B. des molaren Monomer-Initiator-Verhältnisses, der Reaktionszeit oder der Temperatur gesteuert werden und liegt im Allgemeinen zwischen 500 und 30.000, bevorzugt zwischen 1.000 und 15.000, besonders bevorzugt zwischen 1.500 und 10.000. Der Hydroxylgruppen-Gehalt der 100 %igen Kopolymerisate (P) beträgt bevorzugt 1 bis 5 Gew.-%, bevorzugt 1,5 bis 4,5 Gew.-% und besonders bevorzugt 1,75 bis 3,5 Gew.-%.

Vor, während oder nach der Dispergierung der Kopolymerisate (P) in Wasser werden die vorhandenen Säuregruppen zumindest anteilig durch Zugabe geeigneter Neutralisationsmittel in ihre Salzform überführt. Als Neutralisationsmittel geeignet sind organische Amine oder wasserlösliche anorganische Basen, wie z.B. lösliche Metallhydroxide, Metallcarbonate oder Metallhdrogencarbonate, wie z.B. Natrium- oder Kaliumhydroxid.

Beispiele für geeignete Amine sind N-Methylmorpholin, Triethylamin, Ethyldiisopropylamin, N,N-Dimethylethanolamin, N,N-Dimethylisopropanolamin, N-Methyldiethanolamin, Diethylethanolamin, Triethanolamin, Butanolamin, Morpholin, 2-Aminomethyl-2-methyl-propanol oder Isophorondiamin. In Mischungen kann auch anteilig Ammoniak eingesetzt werden. Besonders bevorzugt sind Triethanolamin, N,N-Dimethylethanolamin und Ethyldiisopropylamin.

Die Neutralisationsmittel werden in solchen Mengen zugesetzt, dass in Summe ein theoretischer Neutralisationsgrad [der Säuregruppen] von 40 bis 150 %, bevorzugt 60 bis 120 % vorliegt. Der Neutralisationsgrad versteht sich dabei als Verhältnis von zugesetzten basischen Gruppen der Neutralisationskomponente zu Säurefunktionen des Kopolymerisats. Der pH-Wert der erfindungsgemäßen wässrigen Kopolymerisat-Dispersion beträgt 6 bis 10, bevorzugt 6,5 bis 9.

Die erfindungsgemäßen Kopolymerisatdispersionen sind besonders geeignet als Bindemittel für wässrige Polyurethan-Zweikomponenten(2K)-Beschichtungsmittel in Kombination mit geeigneten Vernetzern (X).

Gegenstand der Erfindung sind weiterhin wässrige Polyurethan-Zweikomponenten-Beschichtungsmittel enthaltend Bindemittel auf Basis der erfindungsgemäßen, wässrigen Sekundärdispersionen und Isocyanatgruppen-haltige Vernetzern (X).

Bevorzugt werden als Vernetzer (X) Polyisocyanate eingesetzt. Solche Polyisocyanate weisen 2 oder mehr NCO-Gruppen pro Molekül auf und basieren beispielsweise auf Isophorondiisocyanat, Hexamethylendiisocyanat, 1,4-Diisocyanatocyclohexan, Bis-(4-iso-cyanatocyclohexan)-methan, 1,3-Diisocyanatobenzol, Triisocyanatononan oder den isomeren 2,4- und 2,6-TDI und können ferner Urethan-, Isocyanurat und/oder Biuretgruppen aufweisen. Gegebenenfalls können die Polyisocyanate auch blockiert sein.

Besonders bevorzugt ist der Einsatz niedrigviskoser Polyisocyanate der vorstehend genannten Art auf Basis aliphatischer oder cycloaliphatischer Isocyanate. Gegebenenfalls können diese auch hydrophiliert sein.

Die als Vernetzer eingesetzten Polyisocyanate weisen bei 23°C im Allgemeinen eine Viskosität von 10 bis 5 000 mPas auf und können auch falls zur Viskositätseinstellung gewünscht in Abmischung mit geringen Mengen an inerten Lösemitteln zum Einsatz gelangen.

Die erfindungsgemäßen Kopolymerisate sind im Allgemeinen ausreichend hydrophil, so dass auch hydrophobe Vernetzerharze ohne zusätzliche Emulgatoren dispergiert werden können. Eine Verwendung externer Emulgatoren ist dadurch jedoch nicht ausgeschlossen.

Wasserlösliche oder dispergierbare Polyisocyanate sind z.B. durch Modifikation mit Carboxylat-, Sulfonat- und/oder Polyethylenoxidgruppen und/oder Polyethylenoxid/Polypropylenoxidgruppen erhältlich. Eine Hydrophilierung der Polyisocyanate ist z.B. durch Umsetzung mit unterschüssigen Mengen an einwertigen, hydrophilen Polyetheralkoholen möglich. Die Herstellung derartiger hydrophilierter Polyisocyanate ist beispielsweise in der EP-A 0 540 985 (S. 3, Z. 55 bis S. 4, Z. 5) beschrieben. Gut geeignet sind auch die in der EP-A 959 087 (S. 3, Z. 39 bis 51) beschriebenen Allophanatgruppen enthaltenden Polyisocyanate, die durch Umsetzung monomerenarmer Polyisocyanate mit Polyethylenoxidpolyetheralkoholen unter Allophanatisierungsbedingungen hergestellt werden. Auch die in der DE-A 100 078 21 (S. 2, Z. 66 bis S. 3, Z. 5) beschriebenen wasserdispergierbaren Polyisocyanatgemische auf Basis von Triisocyanatononan sind geeignet. Besonders geeignet und bevorzugt sind mit ionischen Gruppen insbesonder Sulfonatgruppen hydrophilierte Polyisocyanate, wie sie z.B. in der DE-A 100 24 624 (S. 3, Z. 13 bis 33) beschrieben sind.

Prinzipiell ist natürlich auch der Einsatz von Mischungen verschiedener Vernetzerharze möglich.

Das Verhältnis der Hydroxylgruppen der Bindemittelkomponente zu den Isocyanatgruppen des Vernetzers (X) beträgt üblicherweise 3:1 bis 1:5, bevorzugt 2:1 bis 1:3 und besonders bevorzugt 1:1 1 bis 1:2.

Die Beschichtungsmittel, enthaltend die erfindungsgemäßen wässrigen Sekundärdispersionen können auf beliebige Substrate aufgebracht werden, z.B. Holz, Metall, Kunststoff, Papier, Leder, Textilien, Filz, Glas oder mineralische Untergründe sowie auch auf bereits beschichtete Untergründe. Eine besonders bevorzugte Anwendung ist die Verwendung der wässrigen Beschichtungsmitteln zur Herstellung von Beschichtungen auf saugenden Untergründen wie z.B. Holz oder offenporigen, mineralischen Untergründen. Bevorzugtes Substrat ist Holz.

Ebenfalls Gegenstand der vorliegenden Erfindung sind Gegenstände aus Holz, beschichtet mit Beschichtungsmitteln enthaltend die erfindungsgemäßen wässrigen Sekundärdispersionen.

Die Beschichtungsmittel können als solche oder in Kombination mit weiteren aus der Lacktechnologie bekannten Hilfs- und Zusatzmitteln wie z.B. Füllstoffen und Pigmenten verwendet werden.

Der Auftrag der Beschichtungsmittel, enthaltend die erfindungsgemäße Sekundärdispersionen, kann auf bekannte Weise, z.B. durch Streichen, Gießen, Rakeln, Spritzen, Sprühen, Schleudern, Walzen oder Tauchen erfolgen.

### Beispiele

### Chemikalien

Bayhydur® XP 2487/1 (BayerMaterialScience AG, Leverkusen)
By® 024 (Byk Chemie, Wesel)
Dowanol® PnB (Dow Deutschland, Schwalbach/Taunus)
Dowanol® PMA (Dow Deutschland, Schwalbach/Taunus)
Peroxan® DB (PERGAN, Bocholt)
VeoVa™ 9 (Hexion Specialty Chemicals B.V., Rotterdam, NL)

### Prüfvorschriften

Trocknungszeit: Die 2K Klarlacke gemäß Tabelle 3 werden mit einem Rakel in einer Nassfilmstärke von 240 µm auf Glasplatten aufgetragen. Die beschichteten Glasplatten werden in horizontaler Lage bei 25°C und 55% rel. Luftfeuchtigkeit gelagert. Die klebfreie Zeit wird durch Eindrücken des Lackfilms mit dem (Zeige-)Finger getestet. Als klebfreie Zeit wird der Zeitpunkt bezeichnet, wenn der Finger keinen dauerhaft sichtbaren Abdruck mehr hinterlässt.

Blocking: Die 2K Klarlacke gemäß Tabelle 3 werden mittels Spritzapplikation (Niederdruckverarbeitung) auf Sperrholzplättchen von 6 cm x 6 cm aufgetragen. Nach 15 Minuten Ablüften bei 25°C, 55% rel. Luftfeuchtigkeit werden die Lacke 3 Stunden bei 40°C gehärtet. Anschließend werden die lackierten Holzplättchen paarweise mit der Lackschicht aufeinander gelegt und mit 3,6 kg Gewichts-Belastung eine Stunde bei 60°C gelagert. Nach Abkühlen auf Raumtemperatur wird die Trennbarkeit der beiden Lackschichten geprüft.
Bewertung: 0 = vollständiges Verkleben der Lackoberflächen (Koalezens) der Lackschichten, 5 = kein Blocken

### Herstellvorschrift (Teile gemäß Tabelle):

Teil I wurde in einem 10 L-Reaktor mit Rührer, Rückflusskühler, Temperaturmessung und Monomerzulauf (Tropftrichter) vorgelegt und 1 Stunde ein leichter Stickstoffstrom übergeleitet. Anschließend wurde unter Rühren aufgeheizt auf 148°C. Nach Erreichen der Temperatur wurde Teil II innerhalb 20 min zugegeben. Sofort danach wurden parallel Teile III und IV in 4,5 Stunden gegebenenfalls unter Kühlung zudosiert, so dass die Temperatur 153°C nicht überstieg. Nach vollständiger Zugabe wurde 0,5 Stunden bei 148°C gehalten. Anschließend wurde Teil V und VI in 1,5 Stunden zudosiert. Anschließend noch 1 Stunde bei 148°C gehalten, dann auf 100°C abgekühlt und Teil VII zugeben. Nach weiteren 0,5 Stunden homogenisieren wurde mit 60°C warmem Wasser (Teil VIII) innerhalb von 0,5 Stunden dispergiert, 2 Stunden bei 80°C nachgerührt und über Filter abgelassen.

**Tabelle 1 erfindungsgemäße Polymerisat-Dispersionen im Vergleich zu nicht erfindungsgemäßen Dispersionen (Vergleich)**

| | | **erfindungsgemäß** | **Vergleich** | **Vergleich** | **erfindungsgemäß** | **erfindungsgemäß** | **Vergleich** | **erfindungsgemäss** |
|---|---|---|---|---|---|---|---|---|
| | **Beispiel** | **1** | **2** | **3** | **4** | **5** | **6** | **7** |
| Teil I: | VeoVa^{®}9 | 457,0 g | 457,0 g | 457,0 g | 457,0 g | 457,0g | 228,5g | 295,0 |
| | Dowanol^{®} PnB | 208,0 g | 208,0 g | 208,0 g | 208,0 g | 213,0 g | 213,0 g | 295,0 |
| Teil II: | Peroxan^{®} DB , | 12,0 g | 12,0 g | 12,0 g | 12,0 g | 12,0g | 12,0 g | |
| | Dowanol^{®} PnB | 12,0 g | 12,0g | 12,0 g | 12,0 g | 12,0 g | 12,0 g | |
| Teil III: | Styrol | 359,0 g | 359,0 g | 359,0g | 359,0g | 208,0 g | 775,0 g | 166,0 |
| | HEMA^{a}) | 377,0 g | 377,0 g | 377,0 g | 377,0 g | 584,5 g | 540,0 g | 505,0 |
| | MMA^{b}) | 1042,0 g | 1042,0 g | 1078,0 g | 1042,0g | 571,5 g | 1165,5 g | 466,0 |
| | nBA^{c}) | 336,0 g | | 336,0 g | | 124,5 g | 228,5 g | 99,0 |
| | iBoMA^{d)} | 370,0 g | | | | 555,0g | | 442,5 |
| | nBMA^{e)} | | 706,0 g | | 706,0 g | 441,0 g | | 381,0 |
| | CHMA^{f)} | | | 334,0 g | | | | |
| Teil IV: | Peroxan^{®} DB | 4.3,0 g | 43,0 g | 43,0 g | 43,0g | 43,0 g | 43,0 g | 34,3 |
| | Dowanol^{®} PnB | 53,0g | 53,0 g | 53,0 g | 53,0 g | 53,0 g | 53,0 g | 34,3 |
| Teil V: | HEMA^{a)} | 189,0 g | 189,0 g | 189,0 g | 189,0 g | 278,0 g | 266,5 g | 212,0 |
| | MMA^{b)} | 266,0 g | 266,0 g | 266,0 g | 266,0 g | 178,0 g | 188,5 g | 132,5 |
| | n-BA^{c)} | 148,0 g | 148,0 g | 148,0 g | 148,0 g | 148,0 g | 148,0 g | 118,0 |
| | Acrylsäure | 88,5 g | 88,5 g | 88,5 g | 88,5 g | 88,5 g | 88,5 g | 88,5 |
| Teil VI: | Peroxan^{®} DB | 12,0 g | 12,0 g | 12,0 g | 12,0 g | 12,0 g | 12,0 g | 9,6 |
| | Dowanol^{®} PnB, | 27,0 g | 27,0 g | 27,0 g | 27,0g | 27,0g | 27,0g | 21 |
| Teil VII | N,N-DMEA, | 115,4 g | 115,4 g | 115,4 g | 115,4g | 144,0g | 115,4g | 115,4 |
| Teil VIII : | Wasser | 3595,0g | 3595,0 g | 3595,0 g | 3595,0 g | 3565,0 g | 3595,0 g | 3960,0 |
| | Festkörper [Gew.-%] | 48,0 | 47,6 | 47,4 | 47,8 | 44,2 | 49,5 | 40,8 |
| | Lösemittelgehalt [Gew.%] | 3,8 | 3,8 | 3,8 | 3,9 | 3,6 | 4,0 | 4,8 |
| | OH-Z [mg KOH/g] | 66 | 66 | 66 | 66 | 99 | 99 | 99 |
| | Säurezahl [mg KOH/g] | 19,7 | 19,4 | 19,6 | 19,5 | 19,6 | 20,0 | 24,6 |
| | T_{G}[°C] | 65 | 64 | 59 | 78 | 66 | 66 | 116 |

| | | | | | | | | |
|---|---|---|---|---|---|---|---|---|
| a) Hydroxyethylmethacrylat; b) Methylmethacrylat; c) n-Butylacrylat; d) i-Bornylmethacrylat; e) n-Butylmethacrylat; f) Cyclohexylmethactylat | | | | | | | | |

**Tabelle 2: Brutto-Zusammensetzung der Monomertypen**

| | **1** | **2** | **3** | **4** | **5** | **6** | **7** | **8** |
|---|---|---|---|---|---|---|---|---|
| **Beispiel** | **erfindungsgemäß** | **Vergleich** | **Vergleich** | **erfindungsgemäß** | **erfindungsgemäß** | **Vergleich** | **erfindungsgemäß** | DE 102 37 576 **Beispiel 6** |
| (M1) | 10,2 | 0 | 9,2 | 19,7 | 15,3 | 14,3 | 15,0 | 17,9 |
| (M2) | 12,6 | 12,6 | 12,6 | 12,6 | 12,6 | 6,3 | 10,0 | 0,0 |
| (M3) | 15,6 | 15,6 | 15,6 | 15,6 | 23,8 | 22,2 | 24,3 | 30,6 |
| (M4) | 2,4 | 2,4 | 2,4 | 2,4 | 2,4 | 2,4 | 3,0 | 3,1 |
| (M5) | 58,3 | 68,5 | 60,2 | 50,0 | 45,9 | 69,1 | 46,2 | 48,4 |
| (M6) | 0,0 | 0.0 | 0,0 | 0,0 | 0,0 | 0,0 | 0,0 | 0,0 |

**Tabelle 3: Anwendungstechnische Prüfung**

| | **erfindungsgemäß** | **Vergleich** | **Vergleich** | **erfindungsgemäß** | **erfindungsgemäß** | **Vergleich** | **erfindungsgemäß.** | DE 102 37 576 Beispiel 6 |
|---|---|---|---|---|---|---|---|---|
| Beispiel 1 | 52,7 g | | | | | | | |
| Beispiel 2 | | 53,1 g | | | | | | |
| Beispiel 3 | | | 53,4 g | | | | | |
| Beispiel 4 | | | | 52,9 g | | | | |
| Beispiel 5 | | | | | 56,2 g | | | |
| Beispiel 6 | | | | | | 50,1g | | |
| Beispiel 7 | | | | | | | 60,9 g | |
| Beispiels 8 | | | | | | | | 55,2 g |
| Byk 024 Byk 024 | 1,0 g | 1,0 g | 1,0 g | 1,0 g | 1,0 g | 1,0 g | 1,0g | 1,0 g |
| Wasser | 24,3 g | 23,9 g | 23,6 g | 24,1 g | 26,3 g | 32,4 g | 21,6 g | 27,3 g |
| Bayhydur^{®} XP 2487/1 (80%ig in Dowanol^{®} PMA) | 10,5 g | 10,5 g | 0,5 g | 10,5 g | 15,8 g | 15,8 g | 15,8 g | 15,8 g |
| Trocknung klebfreie Zeit [h] | 2,0 | 2,0 | 2,5 | 2,0 | 1,5 | 1,5 | 2,0 | >6 |
| Blocking^{a)} | 5 | 1 | 1 | 4 | 5 | 0 | 4 | 0 |

| | | | | | | | | |
|---|---|---|---|---|---|---|---|---|
| a) 0 = Koalezens, 5 = kein Blocken | | | | | | | | |

### Beispiel 9

### A. Vorstufe

Teil I wurde in einem 10 L-Reaktor mit Rührer, Rückflusskühler, Temperaturmessung und Monomerzulauf (Tropftrichter) vorgelegt und 1 Stunde ein leichter Stickstoffstrom übergeleitet. Anschließend wurde unter Rühren aufgeheizt auf 148°C. Nach Erreichen der Temperatur wurde Teil II innerhalb 20 min zugegeben. Sofort danach wurden parallel Teile III und IV in 4,5 Stunden gegebenenfalls unter Kühlung zudosiert, so dass die Temperatur 153°C nicht überstieg. Nach vollständiger Zugabe wurde 1 Stunde bei 148°C gehalten. Nach dem Abkühlen erhält man ein hochviskoses Harz mit 68,5 ± 1% Gew.-% Festkörpergehalt.

| | | |
|---|---|---|
| Teil I : | Dowanol^{®} PnB | 3438 g |
| | | |
| Teil II : | Peroxan® DB | 33 g |
| | Dowanol® PnB | 33 g |
| | | |
| Teil III : | Methylmethacrylat | 1612 g |
| | n-Butylacrylat | 403 g |
| | n-Butylmethacrylat | 2014 g |
| | VeoVa® 9 | 4029 g |
| | | |
| Teil IV : | Peroxan® DB | 118 g |
| | Dowanol^{®} PnB | 321 g |

### B. Copolymerisat-Dispersion

Teil I wurde in einem 30 L-Reaktor mit Rührer, Rückflusskühler, Temperaturmessung und Monomerzulauf (Tropftrichter) vorgelegt und 1 Stunde ein leichter Stickstoffstrom übergeleitet. Anschließend wurde unter Rühren aufgeheizt auf 148°C. Nach Erreichen der Temperatur wurde Teil II innerhalb 20 min zugegeben. Sofort danach wurden parallel Teile III und IV in 4,5 Stunden gegebenenfalls unter Kühlung zudosiert, so dass die Temperatur 153°C nicht überstieg. Nach vollständiger Zugabe wurde 0,5 Stunden bei 148°C gehalten. Anschließend wurde Teil V und VI in 1,5 Stunden zudosiert. Anschließend noch 1 Stunde bei 148°C gehalten, dann auf 100°C abgekühlt und Teil VII zugeben. Nach weiteren 0,5 Stunden homogenisieren wurde mit 60°C warmem Wasser (Teil VIII) innerhalb von 0,5 Stunden dispergiert, 2 Stunden bei 80°C nachgerührt und über Filter abgelassen.

Die resultierende Dispersion hatte einen Festkörpergehalt von 39,6 Gew.-%, eine mittlere Teilchengröße von 105 nm, einen Lösemittelgehalt von 3,2 Gew.-%, eine Hydroxylzahl von 99 mg KOH/g bezogen auf Feststoff und eine Säurezahl von 25 mg KOH/g bezogen auf Feststoff.

| | | |
|---|---|---|
| Teil I : | Vorstufe A | 1994 g |
| | | |
| Teil II : | Peroxan® DB | 36 g |
| | Dowanol® PnB | 36 g |
| | | |
| Teil III : | VeoVa®9 | 702 g |
| | Styrol | 620 g |
| | Methylmethacrylat | 1442 g |
| | Hydroxyethylmethacrylat | 1748 g |
| | n-Butylacrylat | 305 g |
| | i-Bornylmethacrylat | 1659 g |
| | n-Butylmethacrylat | 984 g |
| | | |
| Teil IV : | Peroxan® DB | 129 g |
| | Dowanol® PnB | 154 g |
| | | |
| Teil V : | Methylmethacrylat | 499 g |
| | Hydroxyethylmethacrylat | 799 g |
| | n-Butylacrylat | 444 g |
| | Acrylsäure | 333 g |
| | | |
| Teil VI: | Peroxano® DB | 36 g |
| | Dowanol® PnB | 80 g |
| | | |
| Teil VII : | Dimethylethanolamin | 432 g |
| | | |
| Teil VIII : | dest. Wasser | 14642 g |

## Patentansprüche

1. Wässrige Kopolymerisat-Sekundärdispersionen, enthaltend ein Kopolymer (P), aufgebaut aus einer Mischung radikalisch polymerisierbarer Monomeren(M) enthaltend
(M1) cycloaliphatische Ester der Acryl- und/oder Methylacrylsäure sowie
(M2) Vinylester aliphatischer Carbonsäuren.

2. Wässrige Kopolymerisat-Sekundärdispersionen gemäß Anspruch 1, **dadurch gekennzeichnet, dass** Kopolymere (P) aufgebaut sind aus Monomeren (M) ausgewählt aus der Gruppe enthaltend
(M1) 10 bis 30 Gew.%'cycloaliphatische Ester der Acrylsäure und/oder Methacrylsäure oder deren Mischungen,
(M2) 7,5 bis 40 Gew.-% Vinylester aliphatischer Carbonsäuren,
(M3) 14 bis 36 Gew.-% hydroxyfunktionelle, radikalisch polymerisierbare Monomere,
(M4) 1 bis 4,5 Gew.% carboxylfunktionelle, radikalisch polymerisierbare Monomere,
(M5) 18 bis 62 Gew.-% hydroxy- und carboxylgruppenfreie (Meth)acrylsäureester mit C1 bis C18-Kohlenwasserstoffresten im Alkoholteil und/oder Vinylaromaten,
(M6) 0 bis 40 Gew.-% weitere von (M1) bis (M5) verschiedene Monomere,
wobei die Kopolymere (P) 22,5 bis 50 Gew.-% Monomerenbausteine (M1) plus (M2) enthalten und die Summen der Komponenten (M1) bis (M6) sich zu 100 Gew.% addieren.

3. Wässrige Kopolymerisat-Sekundärdispersionen gemäß Anspruch 1, **dadurch gekennzeichnet, dass** (M2) Vinylester verzweigter, aliphatischer Carbonsäuren der allgemeinen Formel (I) sind, 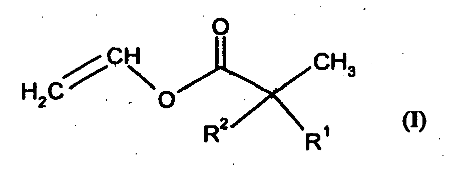 in welcher R¹ und R² gesättigte Alkylgruppen, enthaltend zusammen 6, 7 oder 8 C-Atome, sind.

4. Wässrige Kopolymerisat-Sekundärdispersionen gemäß Anspruch- 1, **dadurch gekennzeichnet, dass** das Kopolymerisat (P) eine OH-Zahl von 35 bis 200 mg KOH/g Feststoff und eine Säurezahl von 10 bis 50 mg KOH/g Feststoff aufweist.

5. Verfahren zur Herstellung wässriger Kopolymerisat-Sekundärdispersionen gemäß Anspruch 1, **dadurch gekennzeichnet, dass** in einem ersten Schritt eine hydrophobe Monomermischung M(I), enthaltend die Monomere (M1) 16,5 bis 33,5 Gew: %, (M2) 12,5 bis 44,5 Gew.-%, (M3) 10 bis 35 Gew.-%, (M4) 0 bis 2,5 Gew.-%, (M5) 10 bis 61 Gew.-% und (M6) 0 bis 40 Gew.-%, polymerisiert wird und anschließend in einer zweiten Stufe zu dem erhaltenen Polymerisat eine hydrophile Monomermischung M(II), enthaltend die Monomere (M3) 20 bis 60 Gew.%, (M4) 10 bis 45 Gew.%, (M5) 30 bis 70 Gew.% und (M6) 0 bis 40 Gew.-%, zugegeben und zu einem Kopolymerisat (P) umgesetzt wird und das entstehende Säuregruppen aufweisende Kopolymerisat (P) in die wässrige Phase überführt wird, wobei vor oder während der Dispergierung mindestens 40 mol-% der Carboxylgruppen neutralisiert werden.

6. Verfahren zur Herstellung wässriger Kopolymerisat-Sekundärdispersionen gemäß Anspruch 1, **dadurch gekennzeichnet, dass** in einem ersten Schritt eine Mischung (V), bestehend aus 30 bis 70 Gew.-% einer oder mehrerer Monomeren (M2) sowie 70 bis 30 Gew.-% eines organischen Lösungsmittels, in einem Reaktor vorgelegt werden, anschließend in einem zweiten Schritt eine hydrophobe Monomermischung M(I), enthaltend die Monomere (M1) 22,5 bis 36,5 Gew.-%, (M2) 0 bis 33,5 Gew.-%, (M3) 10 bis 35 Gew.-%, (M4) 0 bis 2,5 Gew.-%, (M5) 10 bis 67,5 Gew.-% und (M6) 0 bis 40 Gew.-%, polymerisiert wird und anschließend in einer weiteren Stufe zu dem erhaltenen Polymerisat eine hydrophile Monomermischung M(II), enthaltend die Monomere (M3) 20 bis 60 Gew.-%, (M4) 10 bis 45 Gew.-%, (M5) 30 bis 70 Gew.-% und (M6) 0 bis 40 Gew.-%, zugegeben und zu einem Kopolymerisat (P) umgesetzt wird und das entstehende Säuregruppen aufweisende Kopolymerisat (P) in die wässrige Phase überführt wird, wobei vor oder während der Dispergierung mindestens 25 mol-% der Carboxylgruppen neutralisiert werden.

7. Verwendung der wässrigen Kopolymerisat-Sekundärdispersionen gemäß Anspruch 1 als Bindemittel für wässrige Polyurethan-Zweikomponenten(2K)-Beschichtungsmittel in Kombination mit Vernetzern (X).

8. Wässrige Polyurethan-Zweikomponenten-Beschichtungsmittel enthaltend Bindemittel auf Basis von wässrigen Kopolymerisat-Sekundärdispersionen gemäß Anspruch 1 und Isocyanatgruppen-haltige Vernetzern (X).

9. Wässrige Polyurethan-Zweikomponenten-Beschichtungsmittel gemäß Anspruch 8, **dadurch gekennzeichnet, dass** Vernetzer (X) Polyisocyanate sind.

10. Gegenstände aus Holz, beschichtet mit Beschichtungsmitteln enthaltend wässrige Kopolymerisat-Sekundärdispersionen gemäß Anspruch 1.

## Claims

1. Aqueous secondary copolymer dispersions comprising a copolymer (P) composed of a mixture of radically polymerisable monomers (M) comprising
(M1) cycloaliphatic esters of acrylic and/or methacrylic acid and
(M2) vinyl esters of aliphatic carboxylic acids.

2. Aqueous secondary copolymer dispersions according to claim 1, **characterised in that** copolymers (P) are composed of monomers (M) selected from the group comprising
(M1) from 10 to 30 wt.% cycloaliphatic esters of acrylic acid and/or methacrylic acid or mixtures thereof,
(M2) from 7.5 to 40 wt.% vinyl esters of aliphatic carboxylic acids,
(M3) from 14 to 36 wt.% hydroxy-functional, radically polymerisable monomers,
(M4) from 1 to 4.5 wt.% carboxyl-functional, radically polymerisable monomers,
(M5) from 18 to 62 wt.% hydroxy- and carboxyl-group-free (meth)acrylic acid esters having C1 to C18 hydrocarbon radicals in the alcohol moiety, and/or vinyl aromatic compounds,
(M6) from 0 to 40 wt.% further monomers other than (M1) to (M5),
wherein the copolymers (P) comprise from 22.5 to 50 wt.% monomer units (M1) plus (M2) and the sum of components (M1) to (M6) is 100 wt.%.

3. Aqueous secondary copolymer dispersions according to claim 1, **characterised in that** (M2) are vinyl esters of branched, aliphatic carboxylic acids of the general formula (I) 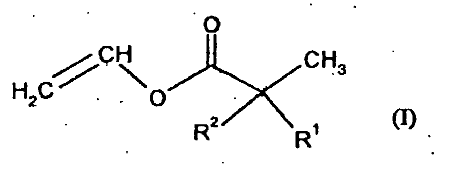 in which R¹ and R² are saturated alkyl groups together containing 6, 7 or 8 carbon atoms.

4. Aqueous secondary copolymer dispersions according to claim 1, **characterised in that** the copolymer (P) has an OH number of from 35 to 200 mg KOH/g solid and an acid number of from 10 to 50 mg KOH/g solid.

5. Process for the preparation of aqueous secondary copolymer dispersions according to claim 1, **characterised in that**, in a first step, a hydrophobic monomer mixture M(I) containing the monomers (M1) from 16.5 to 33.5 wt.%, (M2) from 12.5 to 44.5 wt.%, (M3) from 10 to 35 wt.%, (M4) from 0 to 2.5 wt.%, (M5) from 10 to 61 wt.% and (M6) from 0 to 40 wt.% is polymerised and then, in a second stage, a hydrophilic monomer mixture M(II) containing the monomers (M3) from 20 to 60 wt.%, (M4) from 10 to 45 wt.%, (M5) from 30 to 70 wt.% and (M6) from 0 to 40 wt.% is added to the resulting polymer and reacted to give a copolymer (P), and the resulting copolymer (P) containing acid groups is converted to the aqueous phase, at least 40 mol% of the carboxyl groups being neutralised before or during the dispersion.

6. Process for the preparation of aqueous secondary copolymer dispersions according to claim 1, **characterised in that**, in a first step, a mixture (V) consisting of from 30 to 70 wt.% of one or more monomers (M2) and from 70 to 30 wt.% of an organic solvent is placed in a reactor and then, in a second step, a hydrophobic monomer mixture M(I) containing the monomers (M1) from 22.5 to 36.5 wt.%, (M2) from 0 to 33.5 wt.%, (M3) from 10 to 35 wt.%, (M4) from 0 to 2.5 wt.%, (M5) from 10 to 67.5 wt.% and (M6) from 0 to 40 wt.% is polymerised and then, in a further stage, a hydrophilic monomer mixture M(II) containing the monomers (M3) from 20 to 60 wt.%, (M4) from 10 to 45 wt.%, (M5) from 30 to 70 wt.% and (M6) from 0 to 40 wt.% is added to the resulting polymer and reacted to give a copolymer (P), and the resulting copolymer (P) containing acid groups is converted to the aqueous phase, at least 25 mol% of the carboxyl groups being neutralised before or during the dispersion.

7. Use of the aqueous secondary copolymer dispersions according to claim 1 as binders for aqueous two-component (2K) polyurethane coating compositions in combination with crosslinkers (X).

8. Aqueous two-component polyurethane coating compositions comprising binders based on aqueous secondary copolymer dispersions according to claim 1 and crosslinkers (X) containing isocyanate groups.

9. Aqueous two-component polyurethane coating compositions according to claim 8, **characterised in that** crosslinkers (X) are polyisocyanates.

10. Articles made of wood, coated with coating compositions comprising aqueous secondary copolymer dispersions according to claim 1.

## Revendications

1. Dispersions secondaires aqueuses de copolymérisats contenant un copolymère (P) construit à partir d'un mélange de monomères radicalairement polymérisables (M) contenant
(M1) des esters cycloaliphatiques de l'acide acrylique et/ou méthacrylique ainsi que
(M2) des esters vinyliques d'acides carboxyliques aliphatiques.

2. Dispersions secondaires aqueuses de copolymérisats selon la revendication 1, **caractérisées en ce que** les copolymères (P) sont constitués de monomères (M) choisis dans le groupe contenant
(M1) de 10 à 30 % en poids d'esters cycloaliphatiques de l'acide acrylique et/ou de l'acide méthacrylique ou de mélanges de ceux-ci,
(M2) de 7,5 à 40 % en poids d'esters vinyliques d'acides carboxyliques aliphatiques,
(M3) de 14 à 36 % en poids de monomères hydroxyfonctionnels, radicalairement polymérisables,
(M4) de 1 à 4,5 % en poids de monomères carboxyle-fonctionnels, radicalairement polymérisables,
(M5) de 18 à 62 % en poids d'esters d'acide (méth)acrylique exempts de groupes hydroxy et carboxyle avec des restes hydrocarbonés en C₁ à C₁₈ dans la part alcool et/ou de composés aromatiques vinyliques,
(M6) de 0 à 40 % en poids d'autres monomères différents de (M1) à (M5),
les copolymères (P) contenant de 22,5 à 50 % en poids d'éléments de constitution monomères (M1) plus (M2) et la somme des constituants (M1) à (M6) s'ajoutant jusqu'à 100 % en poids.

3. Dispersions secondaires aqueuses de copolymérisats selon la revendication 1, **caractérisées en ce que** (M2) sont des esters vinyliques d'acides carboxyliques ramifiés aliphatiques de la formule générale (I) 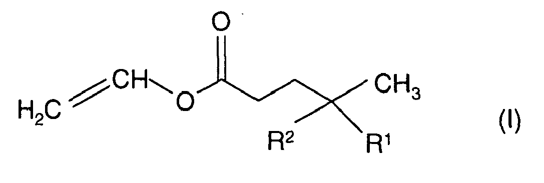 dans laquelle R¹ et R² sont des groupes alkyles saturés contenant ensemble 6, 7 ou 8 atomes de C.

4. Dispersions secondaires aqueuses de copolymérisats selon la revendication 1, **caractérisées en ce que** le copolymère (P) présente un indice OH de 35 à 200 mg de KOH/g de matière solide et un indice acide de 10 à 50 mg de KOH/g de matière solide.

5. Procédé pour la préparation de dispersions secondaires aqueuses de copolymérisats selon la revendication 1, **caractérisé en ce que** l'on polymérise dans une première étape un mélange hydrophobe de monomères M(I) contenant les monomères (M1) 16,5 à 33,5 % en poids, (M2) 12,5 à 44,5 % en poids, (M3) 10 à 35 % en poids, (M4) 0 à 2,5 % en poids, (M5) 10 à 61 % en poids et (M6) 0 à 40 % en poids et on ajoute ensuite dans une seconde étape au polymérisat obtenu un mélange hydrophile de monomères M(II) contenant les monomères (M3) 20 à 60 % en poids, (M4) 10 à 45 % en poids, (M5) 30 à 70 % en poids et (M6) 0 à 40 % en poids et on fait réagir en un copolymérisat (P) et on transfère le copolymérisat (P) obtenu présentant des groupes acides dans la phase aqueuse, au moins 40 % en mole des groupes carboxyles étant neutralisés avant ou pendant la dispersion.

6. Procédé pour la préparation de dispersions secondaires aqueuses de copolymérisats selon la revendication 1, **caractérisé en ce que** l'on dépose dans un réacteur dans une première étape un mélange (V) constitué de 30 à 70 % en poids d'un ou plusieurs monomères (M2) ainsi que de 70 à 30 % en poids d'un solvant organique, on polymérise ensuite dans une seconde étape un mélange hydrophobe de monomères M(I) contenant les monomères (M1) 22,5 à 36,5 % en poids, (M2) 0 à 33,5 % en poids, (M3) 10 à 35 % en poids, (M4) 0 à 2,5 % en poids, (M5) 10 à 67,5 % en poids et (M6) 0 à 40 % en poids et on ajoute ensuite dans une autre étape au polymérisat obtenu un mélange hydrophile de monomères M(II) contenant les monomères (M3) 20 à 60 % en poids, (M4) 10 à 45 % en poids, (M5) 30 à 70 % en poids et (M6) 0 à 40 % en poids et on fait réagir en un copolymérisat (P) et on transfère le copolymère (P) obtenu présentant des groupes acides dans la phase aqueuse, au moins 25 % en mole des groupes carboxyles étant neutralisés avant ou pendant la dispersion.

7. Utilisation des dispersions secondaires aqueuses de copolymérisats selon la revendication 1 comme liants pour des agents de revêtement biconstituants (2K) de polyuréthane aqueux en combinaison avec des agents de réticulation (X).

8. Agents de revêtement biconstituants de polyuréthane aqueux contenant un liant à base de dispersions secondaires aqueuses de copolymérisats selon la revendication 1 et des agents de réticulation (X) contenant des groupes isocyanates.

9. Agents de revêtement biconstituants de polyuréthane aqueux selon la revendication 8, **caractérisés en ce que** les agents de réticulation (X) sont des polyisocyanates.

10. Objets en bois revêtus d'agents de revêtement contenant des dispersions secondaires aqueuses de copolymérisats selon la revendication 1.
